# EUROPEAN PATENT APPLICATION

(11) **EP 3 957 899 A1**
(43) Date of publication of application: **23.02.2022**
(21) Application number: 20191898.4
(22) Date of filing: 20.08.2020
(51) Int. Cl.: F17C 13/02

(54) **DIGITALLY MONITORING OF COMPOSITE PRESSURE VESSEL**

(71) Applicant: Hexagon Ragasco AS, 2831 Raufoss (NO)
(72) Inventor: JENSRUD, Vegard, 2830 Raufoss (NO)
(74) Representative: Onsagers AS

(57) **Abstract**

System and method for digitally monitoring a pressure vessel (19) for holding compressed gas, wherein the system comprises a sensor unit (5) placeable on the pressure vessel (19) for gathering information regarding the condition of the pressure vessel (19), a communication unit for wirelessly communicating the gathered information to a receiver wherein the sensor unit (5) comprises:
• a temperature sensor for measuring the temperature of the pressure vessel (19),
• a gas pressure sensor,
• at least one power unit for supplying power to the sensors and the communication unit.

## Description

### TECHNICAL FIELD

The present invention regards a system and method for digitally monitoring a composite pressure vessel, and more particularly a system and method for digitally monitoring the condition of the composite pressure vessel using a sensor unit placed on the composite pressure vessel.

### BACKGROUND OF THE INVENTION

Composite pressure vessels are widely used over the world to store a wide range of gasses. The gasses are used in fuelling vehicles, in cocking, in oxygen and air tanks used for breathing, tanks used for welding and many more areas. Gasses that is used can be propane, butane, CO₂, O₂, air and many more.

There are several types of pressure cylinders in use, containers made of metals, containers made of composite, and other plastic material, and combinations of these materials. The containers made of composite material can be with or without an inner liner and with or without an outer cover.

US20190178696A1 described herein are embodiments of a system for monitoring and detecting a level of a tank storing a material. The system may be used in deciding of whether and/or when to provide additional material to the tank, to refill the tank partially or entirely. In some embodiments, the tank may be disposed at a premise such as a residence or commercial building and the system may be disposed in part at that premises to monitor the level of the material in the tank. In some embodiments, the material may be a fuel and the tank may be a fuel tank, to provide fuel to utilities equipment at the premises. In other embodiments, the tank may include other materials, such as other utilities materials. In some embodiments, the utilities material may be potable water.

US20090301190A1 regards a capacitive sensor assembly for detecting relative movement or position between objects, such as liquid level in a tank or reservoir, movement of one machine component with respect to another, and so on, includes one or more antenna probes connected to an integrated chip normally associated with touch-screen displays. Each antenna probe operates independently and may be formed as insulated conductive wires or conductive traces between layers of a stiff or flexible substrate, such as a Printed Circuit Board (PCB), with the substrate material serving as the insulating layers. Each antenna probe has a different length representing different measurement positions or locations between the objects being measured to provide dynamic calibration of the measurement under changing environmental conditions.

A problem with the solutions presented above is that they are intended for measuring the level of fuel in a tank like a fuel tank on a vehicle or similar where the fuel is naturally in liquid form at atmospheric pressure. In these solutions the tank is not a pressurized tank and the tank is connected to a vehicle or a place where the supply of energy to the sensor system is not a problem. Further it is not possible using these solutions to keep track of the history of the composite pressure vessel.

The problem with solution like LPG tanks or oxygen tanks or any other gas tank that is free standing is that the explosion risk of the tank if it leaks is severe and the supply of energy to the measuring equipment is none existent. If the gas under pressure is an explosive gas, there are restrictions to what type of energy source that can be used. Further there is a problem with the energy source since tank like these can be stationary for a long time without regular inspection so a limited energy source that needs replacing or charging from a charger is not a good solution. If you use a battery like Li-ion or any other type of battery, they need to be charged and the user has actually got two things to monitor, the fill level of the gas and the battery supplying energy to the measuring equipment.

### SUMMARY OF INVENTION

The present invention is set forth and characterized in the independent claims, while the dependent claims describe other characteristics of the invention.

In one aspect, the invention provides a system for digitally monitoring a pressure vessel for holding compressed gas, wherein the system comprises a sensor unit placeable on the pressure vessel for gathering information regarding the condition of the pressure vessel, a communication unit for wirelessly communicating the gathered information to a receiver wherein the sensor unit comprises: a temperature sensor for measuring the temperature of the pressure vessel, a gas pressure sensor, at least one power unit for supplying power to the sensors and the communication unit.

The digitally monitoring provides the provider of the pressure vessel with updated information on the condition of each pressure vessel and a collection of pressure vessels. The information may be used to identify the need for retesting based on the conditions the vessel has experienced over time.

Further, the system can comprise a capacitive sensor for measuring the level of gas in liquid phase in the pressure vessel.

The capacitive sensor for measuring the level of gas in liquid phase in the pressure vessel can be configured to give a warning if the pressure vessel is overfilled.

The sensor unit can be in the form of a strip adapted to extend substantially the vertical length of the pressure vessel.

The sensor unit may also comprise a shock sensor for measuring shocks the pressure vessel has been subjected to in the form of at least one capacitance pressure sensor.

The communication unit can be a short-range radio communication unit, like e.g. a Bluetooth unit, for communicating information gathered by the sensors to a receiver.

The receiver can be a mobile app or an IoT internet gateway or a display placeable on the pressure vessel.

The power unit can be an energy harvester chip.

The gas pressure sensor can be a capacitive double E sensor. The sensor comprises two E-shaped electrodes, optionally with additional fingers, that are arranged facing each other and with the fingers interlinked. A change in pressure results in an expansion or contraction of the vessel and thereby in a change in the distance between the electrodes which can be sensed.

The pressure vessel can be a composite pressure vessel comprising an inner liner, a layer of composite material and an outer casing, and the sensor unit can be placed inside the liner, attached to the outside of the liner, on the inside of the composite material, on the outside of the composite material, on the inside of the outer casing and on the outside of the outer casing.

The pressure vessel can be a metal pressure vessel and the sensor unit can be placed on the inside of the metal pressure vessel, and on the outside of the metal pressure vessel.

The pressure vessel can be a liner free composite pressure vessel and the sensor unit can be placed on the inside, within or outside the composite material.

In a second aspect the invention provides a method for digitally monitoring a pressure vessel for holding compressed gas, comprising a sensor unit and a communication unit for wirelessly communicating the measurements to a receiver, wherein the sensor unit and the communication unit are attached to the pressure vessel; wherein the sensor unit comprises a temperature sensor for measuring the temperature the pressure vessel is being subjected to, a gas pressure sensor, optionally a shock sensor for measuring shocks the pressure vessel is being subjected to, and at least one power unit for supplying power to the sensors and the communication unit wherein the method comprises the following steps: supplying power from the power unit to the sensors, measuring the temperature, the gas pressure and optionally shock in the pressure vessel, optionally temporarily storing the measured information in a flash memory on the pressure vessel, transmitting the measured and/or the stored information with the communication unit to a receiver, transmitting the information from the receiver a user.

Further, measuring of content either by measuring the amount using capacitance or using a gas pressure measuring and a temperature measuring dependent on the type of gas.

The power unit includes an energy harvester chip and the method can include harvesting energy from radio waves and supplying harvested energy to the power unit.

The communication unit can use Bluetooth communication protocol for transmitting the information to the receiver.

The receiver can be an IoT Gateway that can receive information from a plurality of the pressure vessels.

This solution provides a digitally monitoring of a pressure vessel that is safe to use on any pressure vessel and that is maintenance free.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a partial cut through of a composite pressure vessel where the sensor unit is connected to a gas tight liner of the composite pressure vessel.
Fig. 2a is a side view of an alternative embodiment of the shock sensor and its placement in relation to the pressure vessel.
Fig. 2b is a perspective view of the alternative embodiment of the shock sensor in fig. 2a
Fig. 3a is a drawing of an embodiment of the sensor unit and how it works.
Fig. 3b is a drawing of an embodiment of the sensor unit with all its different parts attached.
Fig. 4 is an illustration of how the sensor unit can communicate with the user of the system, communicating using Bluetooth to a mobile device.
Fig. 5 is an illustration of the sensor unit communicating using Bluetooth to a gateway capable of distributing the information via the internet to a remote destination.
Fig. 6a is an illustration of the systems presented in fig. 4 where the flow of the information between the different parts of the systems is indicated.
Fig. 6b is a detailed image of the embodiment presented in fig. 5 wherein the steps of the process and information flow is indicated.
Fig. 7 is a schematic illustration of the information flow presented in figure 6b.

### DETAILED DESCRIPTION

In the following, embodiments of the invention will be discussed in more detail with reference to the appended drawings. It should be understood, however, that the drawings are not intended to limit the invention to the subject-matter depicted in the drawings.

The term «shock» in «shock sensor» is used herein to refer to any external impact, including but not limited to the vessel being dropped, hit, squeezed, knocked, compressed or crushed and a sensor that can measure such external impacts.

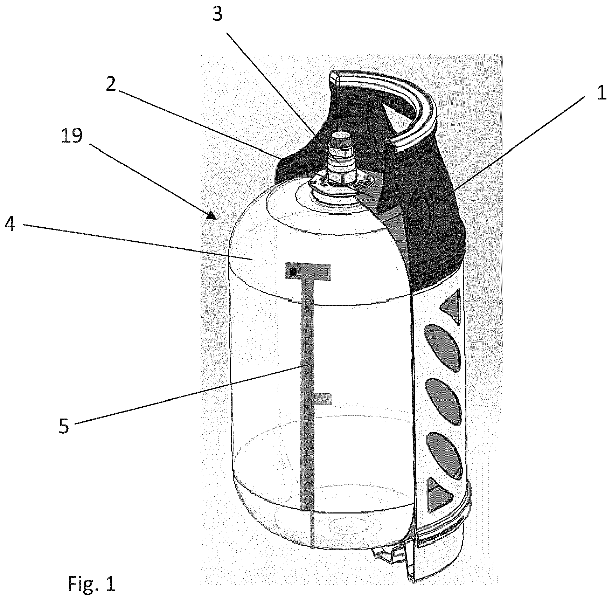

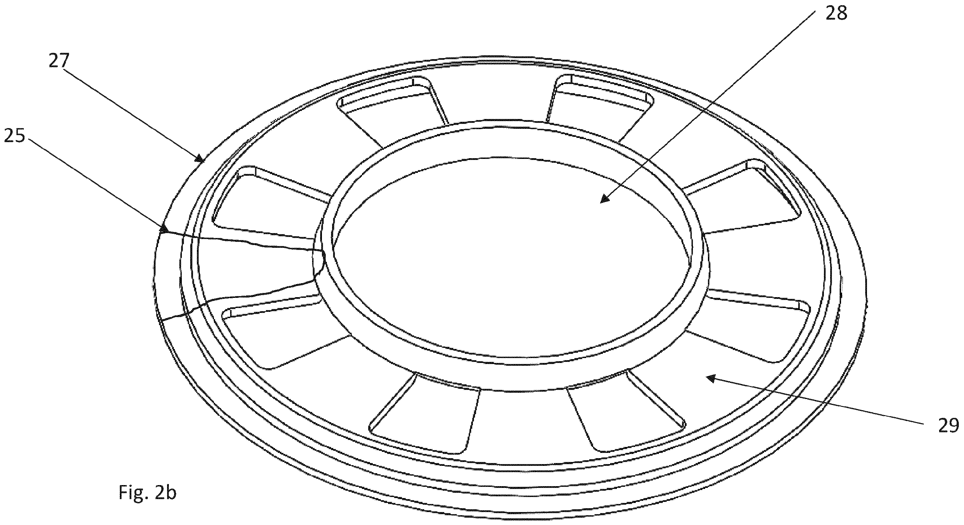

Fig. 1 is a perspective view of a partial cut through of a composite pressure vessel 19 where the sensor unit 5 is connected to a gas tight liner 4 of the composite pressure vessel 19. A composite pressure vessel 19 for storing gas and/or liquified gas may comprise an inner gas tight liner 4, surrounded by a pressure resistant composite layer 2 of fibres and polymer. The pressure vessel 19 is surrounded by an outer casing 1. The liner and the composite layer 2 comprise at least one common opening wherein a boss is arranged. The boss provides for attaching a valve 3. The valve 3 is the inlet/outlet means for controlling the flow of fluid in and out of the pressure vessel 19. The boss and the valve 3 are connected to the top of the pressure vessel 19. The vessel has a dome shaped top and bottom. The mid part of the vessel is cylindrical and the transition between the cylindrical mid part and the top and the bottom of the pressure vessel 19 is called the shoulder. Details regarding the illustrated system is explained in figure 2b.

The sensor unit 5 can be placed on the inside and outside of the liner, on the inside and on the outside of the composite material and on the inside and on the outside of the plastic cover.

The more material there is between the sensor unit 5 and the gas in the pressure vessel 19 the more power is required to perform the measurements. The preferred placements of the sensor unit 5 are therefore as close to the gas as possible without touching it like on the outside of the liner on the composite tank.

For the sensor unit 5 to function properly the sensor unit 5 is glued to the side of the liner. It is important that there is proper contact between the sensor unit 5 and the vessel since the sensor unit 5 must stretch together with the pressure vessel 19 to get accurate measurements.

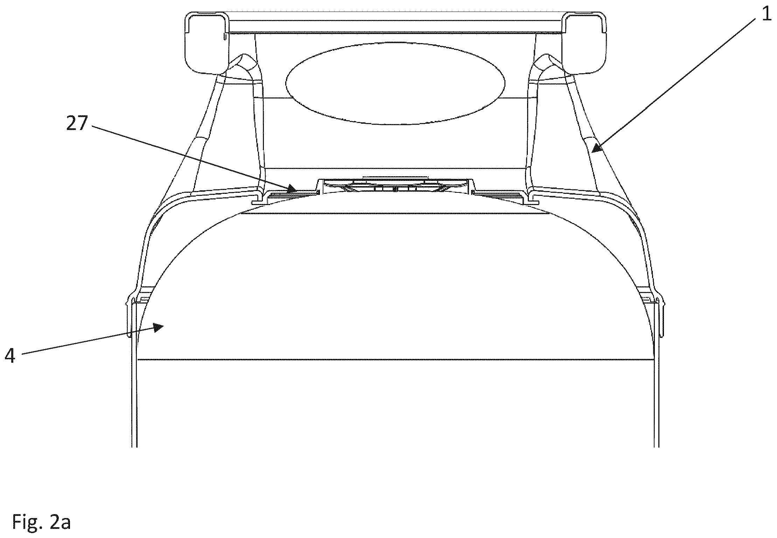

Fig. 2a is a drawing of an alternative embodiment of the present invention wherein a shock sensor 25 is embedded in a ring 27 placed on the pressure vessel 19. The ring 27 has a central hole 28 through which the boss of the pressure vessel 19 is placed.

From the central opening the ring 27 extends outwards and is sandwiched between the composite material 2 and the outer casing 1 as shown in the drawing. The ring 27 is constructed to break before the composite material 2 of the pressure vessel 19.

A shock to the pressure vessel 19 will result in movement between the outer casing 1 and the composite material 2. Since the ring 27 is attached to the boss at the central hole 28 and the outer casing 1 at the perimeter of the ring 27, a change in distance between the composite material 2 and the outer casing 1 will result in the ring 27 breaking.

The shock sensor 25 in the ring can be in the form of an electrical wire that breaks at the same time as the ring. The electrical wire can be connected to the sensor unit 5. The sensor unit sends an electric signal through the wire in order to check if it is broken.

There can be one wire that extends thru the entire ring or there can be several electrical wires in the ring that each is connected to the sensor unit. This allows for locating where on the ring the impact has occurred.

A similar solution can be placed between the casing 1 and the composite material 2 at other places and around other parts of the pressure vessel 19 like the shoulders or the bottom of the pressure vessel 19 or at the cylindrical part of the pressure vessel 19 between the composite material 2 and the outer casing 1.

Fig. 2b is a perspective view of the ring 27 described in fig. 2a. The ring 27 is comprised of a central hole 28 and has break zone 29 that is constructed to break when the pressure vessel 19 is subjected to a force that is greater than a threshold level. The threshold level is set to be lower or the same as the break point of the composite material 2 of the pressure vessel 19. The shock sensors 25 can be placed in the break zone 29.

In an alternative solution the electrical wire can be embedded in shoulder pads positioned at the shoulder of the pressure vessel 19. The shoulder pads can be placed between the composite material 2 and the outer casing 1. When a pressure over a predetermined threshold from either a shock from being hit or dropped or squeezed between two objects is subjected to the pressure vessel 19, the shoulder pads break. When the shoulder pads break the electric wire breaks. This ensures that the damage can be detected by sending an electric signal through the cable.

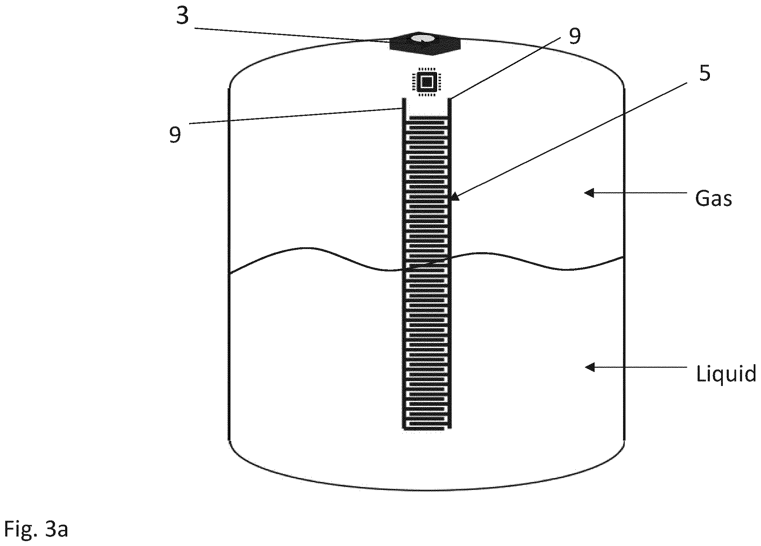

Fig. 3a is a drawing of an embodiment of the present invention illustrating the principle of the invention. The sensor unit 5 is capable of measuring absolute and relative change in the electrical field between at least two electrodes. The electrodes can be copper wires or traces or more suitable geometric shapes such as interdigitated finger pattern, semi-circular pattern or other patterns recognized suitable for those skilled in the art. The ideal pattern utilized is one with high degree of change in Electrical Field/Capacitance while being immune to external noise sources such as a second Electrical Field. In its simplest embodiment the two sensor electrodes 9 form an Electrical Capacitor. This capacitor will be perturbed by the change in dielectric constant along the sensor electrodes 9 based on the amount of liquid gas present in the vessel

This allows for not only knowing the level of gas in liquid form in the pressure vessel 19, but is can be used as a solution for preventing overfilling of the pressure vessel 19.

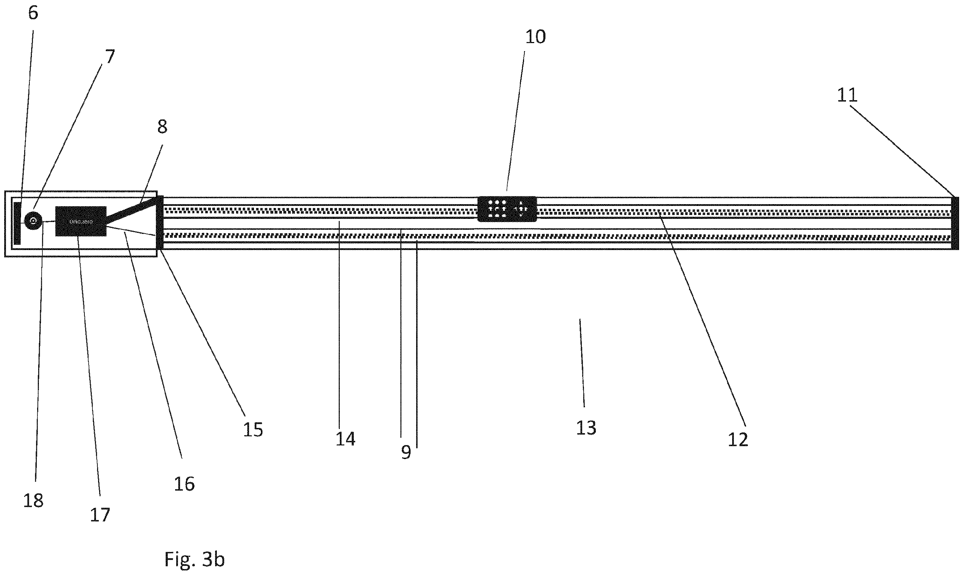

Fig. 3b is a drawing of the sensor unit 5 and the parts it is composed of. In a preferred embodiment of the present invention the sensor unit 5 is comprised of sensor electrodes 9 and a capacitive measuring unit 8. At the first end of the sensor unit 5 there can be a point of reference. This point of reference is measuring gas phase. This reference point 6 is placed above the maximum fill level of the pressure vessel 19. At the opposite end of the sensor unit 5 there can be another reference point 11 measuring liquid phase. This reference point 11 measures the gas in liquid phase. If both reference points 6, 11 show the same reading the pressure vessel 19 is empty and needs refilling. The sensor unit 5 has a Bluetooth transmitter or transceiver. This transmitter or transceiver can transmit the information gathered by the sensors to a receiver. The receiver can be a mobile phone 31 wherein the measured information can be showed in an app on the phone. Alternatively, the receiver can be an IoT gateway 30 which transmits the information to an internet server where the information can be accessed by a user.

The sensor unit 5 can also be comprised of a pressure sensor 10 and a temperature sensor 18. The temperature sensor 18 is a Negative Temperature Coefficient 15 (NTC) temperature sensor 18. These sensors can contribute to the surveillance of the condition of the pressure vessel 19 but is not necessary in order to measure the level of the gas in liquid phase.

To be able to perform the measurements and to transmit the measurements via Bluetooth the sensor strip needs a power source. In a preferred embodiment of the present invention the power is supplied by an energy harvesting chip like the chip described in patent applications NO20170555, NO 20181285, NO20181286 and NO20181283. This energy harvesting chip gathers energy from radio waves. In an alternative solution the energy can be harvested by using solar panels attached to the pressure vessel 19. Both solutions have the benefit that they are maintenance free since they do not need to be recharged in the same way as a battery need. However, a battery can also be used as a power source.

The sensor unit 5 can also be fitted with a memory unit 16. This allows the sensor unit 5 to store the measurements if the pressure vessel 19 is not in contact with a Bluetooth receiver.

On the backside 13 of the sensor unit 5 there is a layer of adhesive material which ensures that the sensor unit 5 has a good attachment to the surface of the pressure vessel 19 it is attached to. The sensor unit 5 also needs to be flexible in order to perform the required measurements.

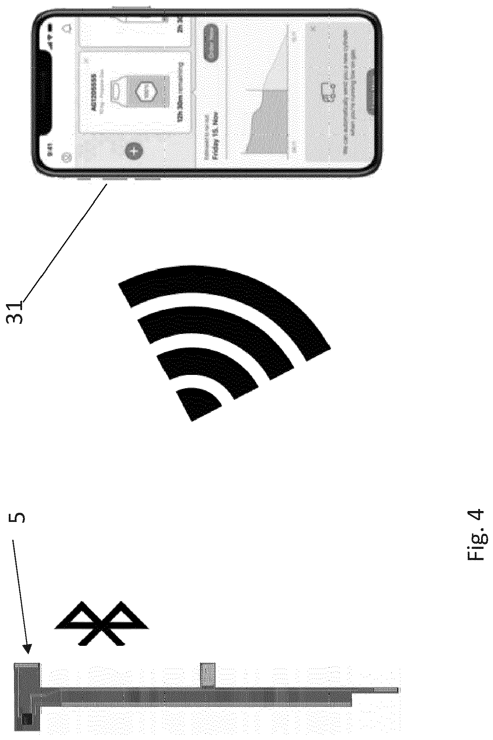

Fig. 4 is an illustration of how the sensor unit 5 can communicate with the user of the system, communicating using Bluetooth to a mobile device 31. This solution allows the user to be able to access the information gathered by the sensor unit 5 and check the level of gas left in the pressure vessel 19. The connection can be initiated by the user or by the Bluetooth unit on the sensor unit 5. If it is accessed by the user, the latest stored information can be transmitted, or the sensor unit 5 can perform an on the spot measurement. Alternatively, the Bluetooth unit on the sensor strip can initiate a transmission of information if the receiver is within transmitting range. The information is in the form of the level of gas in liquid phase in the pressure vessel 19. The app in the mobile device will be able to keep track of the gas level in the pressure vessel 19. If the app registers that the pressure in the vessel is reduced without it being in use an alarm can be given. Further if the sensor unit 5 registers that the gas level in the container is rapidly decreasing it can transmit an alarm to the receiver that something might be wrong.

The information can be shown to the user as either the level of gas in liquid phase or as the amount of gas left in the pressure vessel 19. The amount of gas left in the pressure vessel 19 is calculated using the level of gas in liquid phase, the pressure in the pressure vessel 19 and the volume of the pressure vessel 19. The amount of gas left in the pressure vessel 19 can be displayed as a percentage of the maximum amount of gas allowed in the pressure vessel 19.

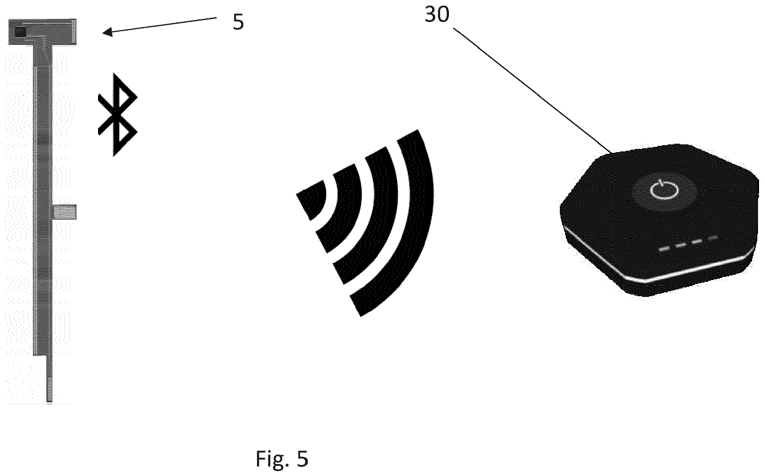

Fig. 5 is an illustration of the sensor unit 5 communicating using Bluetooth to a gateway 30 capable of distributing the information via the internet to a remote destination. In an alternative solution the Bluetooth unit on the pressure vessel 19 can be connected to a receiver in the form of an Internet of Things (IoT) gateway 30. The gateway 30 can transmit the measured information to an Internet database where the information can be accessed by a third party. This solution allows the pressure vessel 19 provider with a service where they can keep track of the gas level in the pressure vessels 19. This allows them to change the gas for a customer without the customers involvement. In this solution several pressure vessels 19 can be connected to one IoT gateway 30, wherein each of the pressure vessels 19 has a sensor unit 5 attached in order to transmit their individual level via the IoT gateway 30 to the service provider.

Further the service provider can be informed if there are any unnatural leakage of gas from the pressure vessel 19.

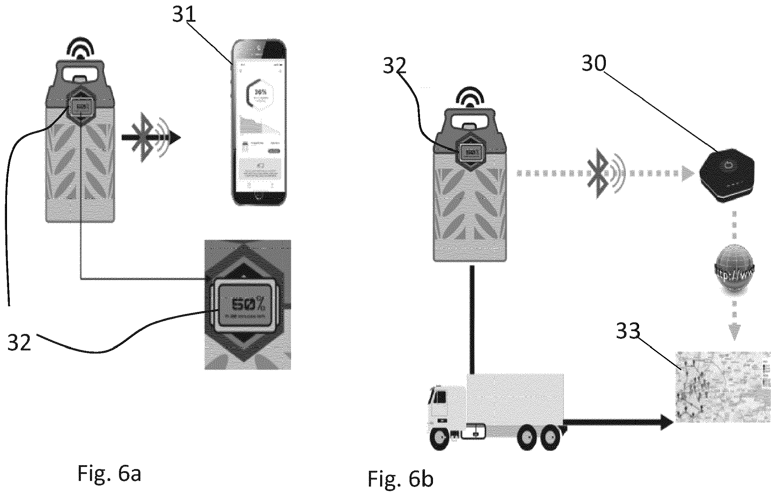

Fig. 6a is an illustration of the systems presented in fig. 4 where the flow of the information between the different parties of the systems is indicated. The sensor unit 5 attached to the composite pressure vessel 19 sends the measured information to a mobile communication device 31 when it is within range of the communication unit 7 of the system. The measured information can be displayed in an app on the mobile communication device. If the displayed information reveals that the composite pressure vessel 19 is empty, or close to empty the user can change the composite pressure vessel 19 to a new filled composite pressure vessel 19. As an alternative solution the measured information can be displayed on a digital display 32 situated on the pressure vessel 19. The digital display can be in addition to the app on the mobile communication device. Alternatively, the digital display can be instead of the app on the mobile communication device.

Fig. 6b is an illustration of the systems presented in and fig. 5 where the flow of the information between the different parties of the systems is indicated. The communication device of the composite pressure vessel 19 sends the measured information to an internet gateway 30. The internet gateway 30 sends the information to e.g. a site on the internet. The information can be accessed by a third party. The third party can be a supplier of composite pressure vessels 19. When the measured gas level of the composite pressure vessel 19 shows that it is below a set threshold level the supplier can change the pressure vessel 19 to a full one. The supplier can keep track of multiple pressure vessel 19 placed in multiple places.

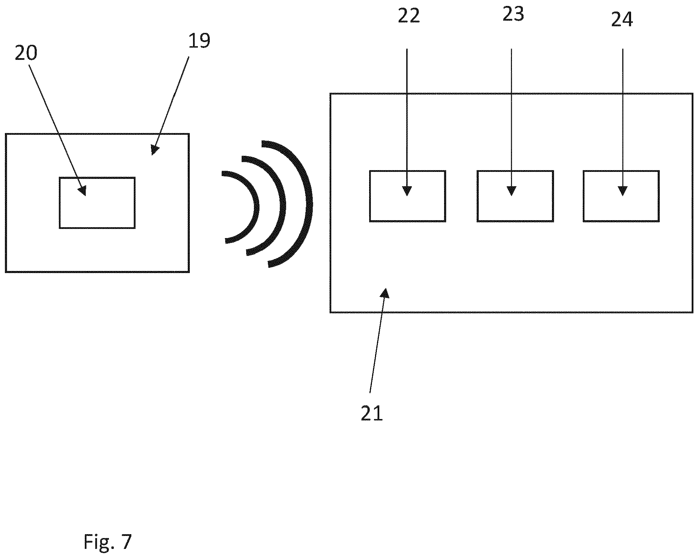

Figure 7 is a detailed image of the embodiment presented in figure 6b wherein all the steps of the process and information flow is indicated. It is displayed that the composite pressure vessel (LPG Cylinder) 19 has an asset management platform 20. This platform 20 collects information about the individual pressure vessels 19. The collected data is sent to a Multicloud Management Platform (MCMP) 21. The MCMP 21 is comprised of a billing, rating and payment module 22 that keeps track of the billing, rating and payment related to each individual pressure vessel 19. Further the MCMP 21 can have a data management module 23. The data management module 23 stores and analyses the information sent from each pressure vessel 19. It can further keep track of the technical information related to each pressure vessel 19. Further the MCMP 21 can have one or more communication interfaces 24. The communication interfaces 24 can be a web interface, it can be a telecommunication interface (GSM networks) and additional networks like satellite navigation interface like GPS interface (Tracking device).

In addition to measuring the gas level of the pressure vessel 19 it is possible to keep track of the number of times the pressure vessel 19 has been refilled.

When an empty pressure vessel 19 is collected the supplier can fill the vessel and relocate it to another location. The supplier can put in the new location of the pressure vessel 19 into datasheet or mark it on the map. Alternatively, each composite pressure vessel 19 can be fitted with a satellite navigation unit that allows the supplier to keep track of the pressure vessel 19 in real time. This makes it possible to keep track of the pressure vessel 19 even if it has been moved.

The sensor unit 5 can have continuous surveillance mode where it continuously updates the status of the pressure vessel 19. This allows a distributer to get continuous updates of the state of the pressure vessel 19 and allow them to detect problems that might occur at an early stage. Further the information could also be made available for the fire department. If there is a fire in a building the fire department can be made aware of the fact that there is a pressure vessel 19 filled with gas in the building. It is important to know what kind of gas that is stored in the vessel, so each pressure vessel 19 is given a unique ID so that it is possible to keep track of the condition of the pressure vessel 19 over time and what is stored in the pressure vessel 19.

Further it is possible to do active surveillance of the pressure vessel 19. This means that a third party like a distributer or the like can actively ask for an update of the condition of the pressure vessel 19.

These functions allow a distributer or a service station to change a pressure vessel 19 if it has been exposed to too high temperatures or shocks that has damages the vessel.

### REFERENCE LIST:

- 1:: Casing
- 2:: Composite layer
- 3:: Valve
- 4:: Inner liner
- 5:: Sensor unit
- 6:: Point of reference «always gas phase»
- 7:: Bluetooth transmitter/communication unit
- 8:: Capacitive measuring unit
- 9:: Sensor electrodes
- 10:: Pressure sensor
- 11:: Point of reference «always liquid phase»
- 12:: Flex
- 13:: Backside surface
- 14:: Capacitance measuring line
- 15:: NTC
- 16:: Memory unit
- 17:: Power unit/energy harvester
- 18:: Temperature sensor
- 19:: Composite pressure vessel (LPG Cylinder)
- 20:: Asset management platform
- 21:: Multicloud Management Platform (MCMP)
- 22:: Billing, rating and payment module
- 23:: Data management module
- 24:: Communication interface
- 25:: Shock sensor
- 27:: Ring
- 28:: Hole
- 29:: Break zone
- 30:: IoT Gateway
- 31:: Mobile Phone
- 32:: Display
- 33:: Logistics route

## Claims

1. System for digitally monitoring a pressure vessel (19) for holding compressed gas, wherein the system comprises a sensor unit (5) placeable on the pressure vessel (19) for gathering information regarding the condition of the pressure vessel (19), a communication unit (7) for wirelessly communicating the gathered information to a receiver (30,31,32) **characterised in that** the sensor unit (5) comprises:
• a temperature sensor (18) for measuring the temperature of the pressure vessel (19),
• a gas pressure sensor (10),
• at least one power unit (17) for supplying power to the sensors and the communication unit (7).

2. System according to claim 1 wherein the system further comprises a capacitive sensor for measuring the level of gas in liquid phase in the pressure vessel (19).

3. System according to claim 2 wherein the capacitive sensor for measuring the level of gas in liquid phase in the pressure vessel (19) is configured to give a warning if the pressure vessel (19) is overfilled.

4. System according to any of the preceding claims wherein the sensor unit (5) is in the form of a strip adapted to extend substantially the vertical length of the pressure vessel (19).

5. System according to any of the preceding claims further comprising a shock sensor for measuring shocks the pressure vessel (19) has been subjected to in the form of at least one capacitance pressure sensor (10).

6. System according to any of the preceding claims wherein the communication unit (7) is a short-range radio communication unit (7), such as a Bluetooth unit, for communicating information gathered by the sensors to the receiver.

7. System according to any of the preceding claims wherein the receiver is a mobile app (31) or an IoT internet gateway (30) or a display (32) placeable on the pressure vessel (19).

8. System according to any of the preceding claims wherein the power unit (17) is an energy harvester (17) chip.

9. System according to any of the preceding claims wherein the gas pressure sensor (10) is a capacitive double E sensor.

10. System according to any of the preceding claims wherein the pressure vessel (19) is a composite pressure vessel (19) comprising an inner liner (4), a layer of composite material (2) and an outer casing (1), and the sensor unit (5) can be placed inside the liner, attached to the outside of the liner, on the inside of the composite material, on the outside of the composite material, on the inside of the outer casing (1) and on the outside of the outer casing (1).

11. System according to any of the preceding claims wherein the pressure vessel (19) is a metal pressure vessel (19) and the sensor unit (5) can be placed on the inside of the metal pressure vessel (19), and on the outside of the metal pressure vessel (19).

12. System according to any of the preceding claims wherein the pressure vessel (19) is a liner free composite pressure vessel (19) and the sensor unit (5) can be placed on the inside, within or outside the composite material.

13. Method for digitally monitoring a pressure vessel (19) for holding compressed gas, comprising a sensor unit (5) and a communication unit (7) for wirelessly communicating the measurements to a receiver attached to the pressure vessel (19); wherein the sensor unit (5) comprises a temperature sensor (18) for measuring the temperature the pressure vessel (19) is being subjected to, a gas pressure sensor (10), optionally a shock sensor for measuring shocks the pressure vessel (19) is being subjected to, and at least one power unit (17) for supplying power to the sensors and the communication unit (7) wherein the method comprises the following steps:
• supplying power from the power unit (17) to the sensors
• measuring the temperature, the gas pressure and optionally shock in the pressure vessel (19),
• optionally temporarily storing the measured information in a flash memory on the pressure vessel (19),
• transmitting the measured and/or the stored information with the communication unit (7) to a receiver,
• transmitting the information from the receiver a user.

14. Method according to claim 13 comprising measuring of content either by measuring the amount using capacitance or using a gas pressure measuring and a temperature measuring dependent on the type of gas.

15. Method according to claim 13 or 14 wherein the power unit (17) includes an energy harvester (17) chip and the method includes harvesting energy from radio waves and supplying harvested energy to the power unit (17).

16. Method according to any one of claims 13-15 wherein the communication unit (7) uses Bluetooth communication protocol for transmitting the information to the receiver.

17. Method according to any one of claims 13-16 wherein the receiver is an IoT Gateway (30) that can receive information from a plurality of the pressure vessels (19).
